# EUROPEAN PATENT SPECIFICATION

(11) **EP 1 180 281 B1**
(45) Date of publication and mention of the grant of the patent: **12.12.2007**
(21) Application number: 00929981.9
(22) Date of filing: 19.04.2000
(51) Int. Cl.: H04L 12/28, H04Q 7/32

(54) **METHOD AND APPARATUS FOR DISTRIBUTION OF COMMUNICATION CHANNELS TO A DEVICE FOR RECEPTION OF ELECTRONIC DOCUMENTS**
VERFAHREN UND VORRICHTUNG ZUR VERTEILUNG VON KOMMUNIKATIONSKNÄLEN AN EINE VORRICHTUNG ZUM EMPFANG ELEKTRONISCHER DOKUMENTE
PROCEDE ET DISPOSITIF DE DISTRIBUTION DE CANAUX DE COMMUNICATION A UN DISPOSITIF DE RECEPTION DE DOCUMENTS ELECTRONIQUES

(30) Priority: 29.04.1999 SE 9901561
(43) Date of publication of application: 20.02.2002
(73) Proprietor: Sundvall, Jonas, 114 32 Stockholm (SE)
(72) Inventor: Sundvall, Jonas, 114 32 Stockholm (SE)
(74) Representative: Onn, Thorsten
(86) International application number: PCT/SE2000/000752
(87) International publication number: WO 2000/067430

(56) References cited:
- WO-A2-97/32439
- WO-A2-98/35481
- US-A- 5 862 325

## Description

### TECHNICAL FIELD

The present invention relates to a method and a device for distributing communication channels to a device for receiving electronic documents.

### PRIOR ART

Financial transactions with stocks and securities have undergone considerable changes during recent years. Due to the introduction of significantly more and better means of conducting financial transactions, such as electronic marketplaces, as well as a dramatic increase in transactions and an extensive information flow of financial news and analyses, trading has become more global. One consequence of this is that a broker is not only expected to posses knowledge of the local market but also of the global market and its competitors to the local companies. The demands for the broker to find the time to stay updated with the enormous flood of news and analyses, and thus allow the possibility of conveying the right information at the right time to clients, are increasing all the time. In large parts of the world, trading in financial means requires authorisation from a supervisory body. In Sweden, this authority is the Finance Inspectorate (Finansinspektionen).

Today, there are primarily two segments of brokers for transactions with shares and other financial means, i.e. traditional stock exchange members or stockbroker, and Internet brokers. There are, of course, brokers who are active in both segments.

The traditional brokerage is essentially run by actual individuals who have telephone contact with their clients. A broker's tool of the trade is primarily an information system that satisfies the need for share price information for those companies that are listed on the market where the broker is active. Via this information system, the broker also receives a flow of news concerning the listed companies and other events that affect the financial marker. The broker is often supported by an analysis department that monitors a number of companies.

Traditionally, the work of a broker is characterised by a combination of advisory services plus executing orders of clients in financial means. The working day of a broker consists of answering telephone calls from clients, providing them with advice and receiving orders from them. During lighter workloads, the broker also provides advice on his own initiative to clients via telephone calls initiated by the broker. It is the task of the brokers to stay abreast of news about the companies in which the clients are interested. However, traditional brokerage runs into problems in that greater demands are continuously made on the services provided by the broker. Traditional brokerage that is today carried out via telephone contact between broker and client is limited by how many clients the broker can physically handle per unit of time. If the brokerage house is to handle more clients or increase its service, a new broker has to be employed. During major news events of a nature that affect the market, a broker has very limited time to initiate calls to a selected portion of his client base before his work is taken up by answering telephone calls from clients who have heard the news from other media such as newspapers. Internet, radio, etc. This means that the majority of the client base gets the news too late so react, i.e. the market already knows of the news and has adjusted to this by setting a share price. Without computer support, a broker cannot know the holdings of shares that his clients have to react quickly to news about individual companies. Even with this tool, an individual broker can only reach a limited number of clients before the news is old. It is thus probable that only a limited number of clients receive calls on such occasions.

In contrast to traditional brokerages, Internet brokerages have the possibility to handle very many clients at the same time. Through Internet brokerage, clients often have access to share prices for all companies listed on the market and an extensive flow of information from the market and its listed companies plus analyses from the brokerage's analysis department. A client of an Internet brokerage usually does not have access to the advice that a traditional brokerage can provide, but instead can base his own decisions on the basic selection of information that is available. A client of an Internet brokerage is dependent of an actual computer and an Internet subscription. The client is most often located in this home at his place of work. The problem arises when he does not have access to his computer and consequently lacks the continuous flow of information and cannot react to any news that may affect the share prices or market. Furthermore, the client does not have access to a personal contact via the traditional brokerage and can therefore not count on receiving a call made to his telephone. When companies in who the client owns shares make reports available, the client is tied in front of this computer screen to scrutinise the report and is thereby prevented from working or has his free time imposed upon.

The flow of news from those markets that the client follows can be so intensive that it can be hard to sift and analyse the information before it is too late. A client who owns shares in a number of companies is interested in following these as well as several others. Thus, the client often finds it difficult to sift and scrutinise the information that the market conveys. In addition, the client does not always have access to a computer and can thus find it impossible to stay abreast of the flow of news. The increasing trade in the financial markets and the massive amounts of information in the form of market prices and financial news makes it very difficult to sift the information and react sufficiently quickly to news that affects the market. The client cannot guarantee that he will be reached on every occasion for the conveying of events that affect the holdings of stocks and securities that the client has, even if there were resources to allocate brokers to call them. The client may also not want to be interrupted but rather wishes to analyse the information undisturbed and simply act on the basis of this.

The US Patent document US-A- 5 862 325 discloses a system where a distribution computer updates provider computers with information dedicated to the provider computers. However, the provider computers do never actively respond to the information they are updated with. At the most they further update the information by downloading it from sites through links dispatched through the distribution computer. Hence, the distribution computer requires or receives no return feed-back upon information distributed. The WAP white paper, available at http://www.wapguide.com/wapguide/AUwap.pdf discloses the main feature of this technology.

### SUMMARY OF THE INVENTION

The present invention relates to a method and a device for distributing communication channels to a device for receiving electronic documents. The device for receiving electronic documents can constitute a WAP telephone, for example. One objective of the invention is, based on knowledge of the holdings of a client of different financial means and of their interest in other companies, together with a flow of information about share prices, news and analyses, to distribute relevant information to a group of subscribers via WAP telephones or another type of wireless network and at the same time make it possible for the client to reply interactively in the form of an order transaction.

The invention includes a means of filtering an income or internal document to mechanically decide whether this is of interest to clients connected to services included in the device. With knowledge of the holding of the client of stocks and securities, and of their interest in other stocks and securities, news and analyses of interest to the client regarding these companies can be automatically sorted and distributed to the WAP telephone of the client. This process takes place entirely automatically and with monitoring in real time. This system can also be used for distributing analyses of the broker himself to clients who have holdings in the stock and securities currently of interest.

According to the present invention, there is also the possibility to send messages to the WAP telephone with current share prices and/or the personal evaluation of the broker regarding the company in question. The client can also be interested in combinations of news, e.g. "Report" and 'Company X", and thus has, according to the invention, the possibility of having this information sent to his WAP telephone when these criteria are met. In this way, it can be assured that the client always receives the correct information and, in this way, is not tied to his computer. If anything dramatic happens in the marker or with the holdings of the client, it is certain that the client is reached by this information and is thereby given the chance to take account of it.

In addition, the invention includes a means for achieving a unique own communication channel for each client with a link to a form that is unique for the client, as well as a means for the simultaneous distribution of the channel via standardised wireless telecommunications technology for advanced services. The communication channel is distributed according to the invention simultaneously to all of the selected clients with mobile terminals for interaction with the standard.

The invention also includes a device through which the client accepts or declines the channel via the mobile terminal. The client can act directly during the message with either buying or selling orders via his WAP telephone. By accepting the channel, the filling-in of a unique form is initiated automatically, where the form is connected (linked) to the channel. The client does thus not need to initiate a call to an individual broker but can act directly electronically via his WAP telephone. In a calm and peaceful manner, the client can sift through the information that has been sent to the WAP telephones and easily react on the basis of the information selected.

The invention also includes a means of routing accepted documents to all clients who are affected by the document. The document routing system is a routine for handling business logistics at the broker. The system is built with so-called nodes. Each node performs a test on each document to decide where it should be sent or if further tests are to be performed. A document can be of different types, e.g. news from an external news distributor, share price information, orders, etc. The test decides if there is information in the news of a company that the broker is monitoring or that is traded by the clients of the broker. If there is information about a company of interest, further tests are performed on the document. The system ensures that the news is complemented by the current share price of the company and fills in an order form on behalf of the client for distribution to the WAP telephone. The clients who are affected by the document can be found in an electronic memory associated with the means of selecting clients for whom the document is of interest.

A document can be a quick recommendation from the broker to his clients with holdings in a certain stock to act quickly. This information passes tests and is complemented by necessary information from the message, which takes place in that the news or analysis concerning an individual company according to the invention is attached to a link to the order form via the WAP service of the broker. This link is coded so that the central system knows the companies to which the news applies. When the client requires access to the order form, the central system will automatically complement the order form with the stock in question and the number of shares that the client holds. The message will even be complemented with the current market share price from the information system. With this function, the time between the client being given the news or analysis and the actual order placement will be very short.

By offering clients of a broker access to the functions described above, the client will always be assured of being notified if a news item or analysis is published that is relevant to the holding of the client in the individual companies. The client will also feel that he or she receives the information as soon as it is published and not feel that other clients are favoured because of their size. The client will be able to be significantly more mobile without the risk of missing events in the market. As the client has access to a very efficient handling regarding their own part in the order transaction, they can react quickly before it is too late.

The broker will have the possibility of providing equally good service for all of his clients. By taking advantage of this, regardless of whether it deals with traditional brokerage or Internet brokerage, a more efficient handling of the clients of the broker is achieved. In addition, the broker makes it possible for his clients to react quickly in the market.

The present invention is defined in more detail through the wording of the enclosed independent claims as well as further embodiments through the non-independent claims.

### BRIEF DESCRIPTION OF THE DRAWINGS

Fig. 1 illustrates a system according to the invention
Fig. 2 illustrates a news form
Fig. 3 illustrates a form for an order to sell

### DETAILED DESCRIPTION OF PREFERRED EMBODIMENTS

Even if the described embodiments refer to the trading of shares, the invention is not restricted to this and other areas of application within the scope of the enclosed claims are possible. WAP (Wireless Application Protocol) is a *de facto* standard for transferring the contents of the Internet and other advanced telecommunications services to digital mobile terminals such as, for example, GSM mobile telephones ("WAP telephones"). In other words, WAP is a technique that makes it possible to surf on the Internet from a mobile telephone. WAP has been developed and is still being developed in an organisation - WAP Forum - where a number of mobile telephone manufacturers and operators are included among the founders. There is a guaranteed support for the standard from the very beginning.

A WAP telephone allows surfing on all World Wide Web pages that are optimised for the service. WAP uses a "language" - WML (Wireless Markup Language) - that in principle is equivalent to the HTML of the WWW. With WML, a common language for developing the services that take advantage of the global spread and acceptance of the Internet has been created. WAP offers a secure and confidential transfer of data and it is an open platform that can be used to create new services.

WAP is independent of the underlying technology and works equally well with SMS and GSM data as with circuit-switched data, data packages, HSCSD, SPRS, UMTS and so on. The technology that is best suited to the application can be used and the services are developed in line with needs. A WAP terminal is a hand-held terminal that communicates over a wireless network. It can be a WAP telephone that communicates over the GSM net or a PDA (personal digital assistant) that communicates over the GSM net or another wireless network. Even if the described embodiments refer to the trading of shares, the invention is not restricted to this and other areas of application within the scope of the enclosed claims are possible.

The present invention is based on a number of systems whereby information can be tailor-made to fit the profile of a client. All information interacts for the communication between client and broker to take place, for example, via a so-called WAP telephone. This not only allows the possibility to distribute electronic information to the client, but also allows transactions and information to be received from the client. Via this system, the present invention allows a news item about an individual company to be sent out as information to the client (subscriber) with a link to a ready filled-in buy/sell order to the client, which the client can accept or decline.

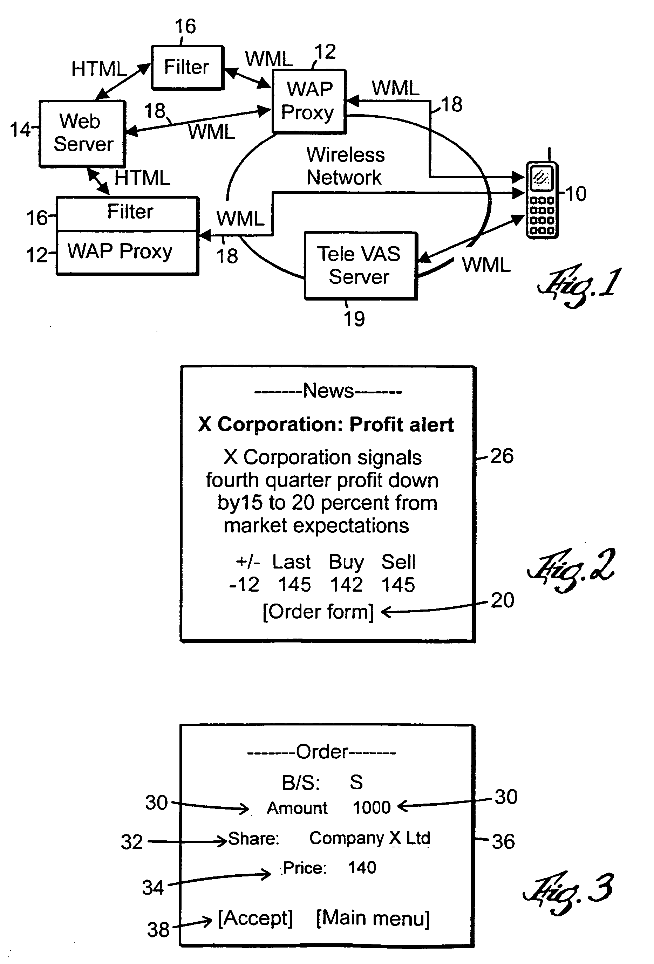

Fig. 1 illustrates a preferred embodiment according to the invention. In this embodiment, the invention includes a WAP telephone 10, WAP Proxy 12 for communication between the WAP telephone 10 and the Web server 14 via the filter means 16. The WAP telephone is also connected to a TeleVAS server (Telephony Value Added Services) 19.

In one embodiment of the invention, the device or system of the broker includes, among other things, the following components; a depot record, i.e. a depot record with information regarding the holdings of the subscriber in financial means and transactions carried out in these; additional information such as share price information, i.e. the market share price of the holdings that comprise the share portfolio of the client and for the markets where the broker is active, news channels and news regarding financial markets; ordering systems with connections to the respective exchange affected to allow buying respectively selling in the stocks and securities in question; commission handling, i.e. systems that monitor the profile of subscribers, their own holdings, limits, etc. and that match these with pre-set criteria and events. In this respect, the WAP server 12 integrates the underlying named and possible unnamed components and handles traffic to and from the mobile net.

A scenario is described below where a news item published in the market that affects a share price is brought to the attention of a broker through a published news item. This can even be applied to one of the news items or analyses of the broker. A news item regarding a profits warning issued by Company X Ltd arrives via an external supplier of news. The news is passed through a document routing system to ascertain if Company X Ltd is a company monitored by the broker or if the clients of the broker have holdings in the company.

If Company X Ltd is a company held by any client, a cross-reference will be run to against all of the holdings of the clients of the broker to select the clients in question. When the clients have been selected, the news is distributed to all clients who have a WAP telephone 10 and who have specifically requested (subscribed to) this service through a communication channel 18 opening at the same time for each and every one of the selected.

Fig. 2 illustrates an example of a news message 26 shown on the WAP telephone of the client. Attached to this news message is an [Order form] link 20. This link is individual for each client to be able to decide which company the news referred to. The news will also be complemented with the current share price.

The client chooses to react to the information that has been sent via the news message 26 and selects the [Order form] link 20 via an accept function in the telephone. The WAP telephone 10 of the client will then establish contact with the WAP server 14 of the broker and thus be shown the order form according to Fig. 3 via the link.

The system of the broker will utilise the individual link by adding the number of shares 30 held by the client, the name of the share 32, as well as the latest share price 34 to the order form.

The client will be shown an order form 36 according to Fig. 3. A scenario is described below where a news item published in the market that affects a share price is brought to the attention of a broker through a published news item 26. This can even be applied to one of the news items or analyses of the broker. A news item regarding a profits warning issued by Company X Ltd. arrives via an external supplier of news.

The news will be passed through a document routing system to ascertain if Company X Ltd is a company monitored by the broker or if the clients of the broker have holdings in the company. If Company X Ltd is a company held by any client, a cross-reference will be run against all of the holdings of the clients of the broker to select the clients in question.

When the clients have been selected, the news 26 is distributed to all clients who have a WAP telephone through the broker, via Web server 14 and other means according to known techniques opening a communication channel 18 to each selected client with a WAP telephone. Attached to channel 18 with the news message is a link 20 [Order form]. This form is individual for each client to be able to decide which company the news referred to. The news can also be complemented with the current share price 34.

The news is transferred through a communication channel 18 that is unique for every selected client, whereby it 26 is shown on the WAP telephone of the client according to Fig 2. The client chooses to react to the information that has been sent, selects the [Order form] link 20 and accepts it. The WAP telephone 10 of the client will then establish contact with the WAP server 14 of the broker and will thereby be shown the order form 36 according to Fig. 3. The system of the broker will utilise the individual link 20 by adding, for example, the number of shares 30 held by the client and the name of the share 32 to the order form 36, as well as obtaining the latest share price 34.

Through the client accepting 38 the form, an order to sell, in this case 1000 shares in Company X Ltd, will be sent to the central order system. The client can then follow order 36 and see that it is executed in the market place via his order book and order completion ticker. If the order is completed, the client will even receive a confirmation sent to his WAP telephone 10. The present invention is not restricted to the embodiments described here, rather it is the wording of the enclosed claims that specifies further embodiments for a person skilled in the art.

## Claims

1. A method for distributing wireless application protocol telephones communication channels (18) to a system for receiving electronic documents:
filtering (16) of an incoming or internal document to mechanically determine if said document is of interest for subscribers of services included in the system;
selecting the subscribers that are affected by the document using an electronic memory belonging to the system, which memory stores information about subscribers interests;
routing of the document, if it was accepted in the filtering step, to the selected subscribers
**characterised by** including the following steps:
providing to a server (14) included in the system, a wireless application protocol communication channel (18), and attaching to this channel, a link to a form (36) that is unique to each of the selected subscribers;
simultaneous distribution of the channel (18) via standardised wireless application protocol telephones telecommunication technology for advanced services to all selected subscribers with mobile terminals (10) for interaction with the standard; and directly
acceptance (38) or rejection by the subscriber of the channel via the mobile terminal, whereby the subscriber, through acceptance (38) of the channel, automatically initiates the filling-in of the unique form (36) that is linked to the channel (18).

2. A method according to claim 1 **characterised in** attaching a link to a form (36) that includes share information.

3. A method according to claims 1-2 **characterised in that** the routing decision includes passing the document through a system of nodes where every node performs a check on a document.

4. A method according to claims 1-3 **characterised in that** the communication channel (18) transfers specific information (26) that is relevant to the subscriber, together with the link.

5. A means adapted to distribution of wireless application protocol telephones communication channels (18) to a system for receiving electronic documents
means of filtering (16) an incoming or internal document to mechanically determine if said document is of interest to subscribers of services included in the system;
means of selecting a set of subscribers that are affected by the document using an electronic memory belonging to the system, which memory stores information about subscribers interests;
means of routing the document, if it was accepted by the filtering means, to the selected subscribers,
**characterised by** including:
means of providing to a server (14) included in the system, a wireless application protocol communication signal (18) and attaching to this channel a link to a form (36) that is unique to each of the selected subscribers;;
means for simultaneous distribution of the channel (18) via standardised wireless application protocol telecommunication technology for advanced services to all selected subscribers with mobile terminals (10) for interaction with the standard; and
means of accepting (38) or rejecting by the subscriber of the channel directly via the mobile terminal, whereby the subscriber, through acceptance (38) of the channel (18), automatically initiates the filling-in of the unique form (36) that is linked to the channel (18).

6. A means according to claim 5 **characterised in that** the form (36) includes share information.

7. A means according to claims 5-6 **characterised in that** the routing decision in the device includes passing a document through a system of nodes, where every node performs a check on the document.

8. A means according to claims 5-7 **characterised in that** the communication channel (18) transfers specific information (26) that is relevant to the subscriber, together with the link.

## Patentansprüche

1. Verfahren zur Verteilung von Drahtlosanwendungsprotokoll-Telefon-Kommunikationskanälen (18) an ein System zum Empfang elektronischer Dokumente:
Filtern (16) eines eingehenden oder internen Dokuments, um mechanisch festzustellen, ob das Dokument für Teilnehmer von im System enthaltenen Diensten von Interesse ist;
Auswählen der vom Dokument betroffenen Teilnehmer mittels eines zum System gehörenden elektronischen Speichers, der Informationen über Teilnehmerinteressen speichert;
Weiterleiten des Dokuments an die ausgewählten Teilnehmer, falls es im Filterungsschritt angenommen wurde
**dadurch gekennzeichnet, dass** es folgende Schritte beinhaltet:
Versehen eines im System enthaltenen Servers (14) mit einem Drahtlosanwendungsprotokoll-Kommunikationskanal (18) und Anhängen eines Links zu einem für jeden der ausgewählten Teilnehmer individuellen Formular (36) an diesen Kanal;
gleichzeitiges Verteilen des Kanals (18) mittels standardisierter Drahtlosanwendungsprotokoll-Telefon-Telekommunikationstechnologie für erweiterte Dienste an alle ausgewählten Teilnehmer mit mobilen Endgeräten (10), zum Interagieren mit dem Standard; und direkte
Annahme (38) oder Ablehnung des Kanals von dem Teilnehmer über das mobile Endgerät, wobei der Teilnehmer mit der Annahme (38) des Kanals automatisch das Ausfüllen des mit dem Kanal (18) verlinkten individuellen Formulars (36) initiiert.

2. Verfahren nach Anspruch 1, **gekennzeichnet durch** das Anhängen eines Links zu einem Formular (36), welches Aktieninformationen enthält.

3. Verfahren nach einem der Ansprüche 1 bis 2, **dadurch gekennzeichnet, dass** die Weiterleitungsentscheidung das Durchlaufenlassen des Dokuments durch ein System aus Knoten beinhaltet, in dem jeder Knoten eine Prüfung an einem Dokument durchführt.

4. Verfahren nach einem der Ansprüche 1 bis 3, **dadurch gekennzeichnet, dass** der Kommunikationskanal (18) zusammen mit dem Link spezifische, für den Teilnehmer relevante Informationen (26) überträgt.

5. Mittel zur Verteilung von Drahtlosanwendungsprotokoll-Telefon-Kommunikationskanälen (18) an ein System zum Empfang elektronischer Dokumente
Mittel zum Filtern (16) eines eingehenden oder internen Dokuments, um mechanisch festzustellen, ob das Dokument für Teilnehmer von im System enthaltenen Diensten von Interesse ist;
Mittel zum Auswählen einer Gruppe von dem Dokument betroffener Teilnehmer mittels eines zum System gehörenden elektronischen Speichers, der Informationen über Teilnehmerinteressen speichert;
Mittel zum Weiterleiten des Dokuments an die ausgewählten Teilnehmer, falls es im Filtermittel angenommen wurde,
**dadurch gekennzeichnet, dass** es beinhaltet:
Mittel zum Versehen eines im System enthaltenen Servers (14) mit einem Drahtlosanwendungsprotokoll-Kommunikationssignal (18) und zum Anhängen eines Links zu einem für jeden der ausgewählten Teilnehmer individuellen Formular (36) an diesen Kanal;
Mittel zum gleichzeitigen Verteilen des Kanals (18) mittels standardisierter Drahtlosanwendungsprotokoll-Telekommunikationstechnologie für erweiterte Dienste an alle ausgewählten Teilnehmer mit mobilen Endgeräten (10), zum Interagieren mit dem Standard; und
Mittel zum Annehmen (38) oder Ablehnen des Kanals von dem Teilnehmer direkt über die mobile Endstelle; wobei der Teilnehmer mit der Annahme (38) des Kanals (18) automatisch das Ausfüllen des mit dem Kanal (18) verlinkten individuellen Formulars (36) initiiert.

6. Mittel nach Anspruch 5, **dadurch gekennzeichnet, dass** das Formular (36) Aktieninformationen enthält.

7. Mittel nach einem der Ansprüche 5 bis 6, **dadurch gekennzeichnet, dass** die Weiterleitungsentscheidung das Durchlaufenlassen eines Dokuments durch ein System aus Knoten beinhaltet, in dem jeder Knoten eine Prüfung an einem Dokument durchführt.

8. Mittel nach einem der Ansprüche 5 bis 6, **dadurch gekennzeichnet, dass** der Kommunikationskanal (18) zusammen mit dem Link spezifische, für den Teilnehmer relevante Informationen (26) überträgt.

## Revendications

1. Procédé de distribution de canaux de communication (18) pour téléphones de protocole d'application sans fil à un système de réception de documents électroniques:
filtrage (16) d'un document entrant ou interne pour déterminer mécaniquement si ledit document est d'intérêt pour des abonnés de services inclus dans le système;
sélection des abonnés concernés par le document au moyen d'une mémoire électronique qui fait partie du système, laquelle mémoire enregistre des informations concernant les intérêts des abonnés;
acheminement du document, s'il a été accepté dans l'étape du filtrage, aux abonnés sélectionnés
**caractérisé en ce qu'**il comprend les étapes suivantes:
fourniture, à un serveur (14) inclus dans le système, d'un canal de communication de protocole d'application sans fil (18) et adjonction à ce canal d'un lien vers un formulaire (36) unique pour chacun des abonnés sélectionnés;
distribution simultanée du canal (18) par une technologie de télécommunication standardisée pour services avancés pour téléphones de protocole d'application sans fil à tous les abonnés sélectionnés munis de terminaux mobiles (10) pour interaction avec le standard; et directement
acceptation (38) ou rejet du canal par l'abonné par l'intermédiaire du terminal mobile; l'abonnée, par l'acceptation (38) du canal, initiant automatiquement le remplissage du formulaire unique (36) qui est lié au canal (18).

2. Procédé selon la revendication 1, **caractérisé par** l'adjonction d'un lien vers un formulaire (36) qui contient des informations relatives à des actions.

3. Procédé selon l'une des revendications 1 à 2,
**caractérisé en ce que** la décision d'acheminement comprend le passage du document par un système de noeuds où chaque noeud effectue un contrôle sur un document.

4. Procédé selon l'une des revendications 1 à 3,
**caractérisé en ce que** le canal de communication (18) transmet conjointement au lien des informations spécifiques (26) pertinentes pour l'abonné.

5. Moyen adapté à la distribution de canaux de communication (18) pour téléphones de protocole d'application sans fil à un système de réception de documents électroniques
moyens pour filtrer (16) un document entrant ou interne pour déterminer mécaniquement si ledit document est d'intérêt pour des abonnés de services inclus dans le système;
moyens pour sélectionner un ensemble d'abonnés concernés par le document au moyen d'une mémoire électronique qui fait partie du système, laquelle mémoire enregistre des informations concernant les intérêts des abonnés;
moyens pour acheminer le document, s'il a été accepté dans le moyen de filtrage, aux abonnés sélectionnés,
**caractérisé en ce qu'**il comprend:
des moyens pour fournir, à un serveur (14) inclus dans le système, un signal de communication de protocole d'application sans fil (18) et pour joindre à ce canal un lien vers un formulaire (36) unique pour chacun des abonnés sélectionnés;
moyens pour la distribution simultanée du canal (18) par une technologie de télécommunication de protocole d'application sans fil standardisée pour services avancés à tous les abonnés sélectionnés munis de terminaux mobiles (10) pour interaction avec le standard; et
moyens pour accepter (38) ou rejeter le canal par l'abonné directement au moyen du terminal mobile; l'abonnée, par l'acceptation (38) du canal (18), initiant automatiquement le remplissage du formulaire unique (36) qui est lié au canal (18).

6. Moyen selon la revendication 5, **caractérisé en ce que** le formulaire (36) contient des informations relatives à des actions.

7. Moyen selon l'une des revendications 5 à 6,
**caractérisé en ce que** la décision d'acheminement comprend le passage d'un document par un système de noeuds, où chaque noeud effectue un contrôle sur un document.

8. Moyen selon l'une des revendications 5 à 6,
**caractérisé en ce que** le canal de communication (18) transmet conjointement au lien des informations spécifiques (26) pertinentes pour l'abonné.
